# EUROPÄISCHE PATENTSCHRIFT

(11) **EP 2 675 544 B1**
(45) Veröffentlichungstag und Bekanntmachung des Hinweises auf die Patenterteilung: **05.10.2016**
(21) Anmeldenummer: 12700935.5
(22) Anmeldetag: 04.01.2012
(51) Int. Cl.: B01D 35/12

(54) **FILTEREINHEIT UND VERFAHREN ZUM BETREIBEN DER FILTEREINHEIT**
FILTER UNIT AND METHOD FOR OPERATING THE FILTER UNIT
ENSEMBLE FILTRE ET PROCÉDÉ SERVANT À FAIRE FONCTIONNER LEDIT ENSEMBLE FILTRE

(30) Priorität: 18.02.2011 DE 102011004367
(43) Veröffentlichungstag der Anmeldung: 25.12.2013
(73) Patentinhaber: ZF Friedrichshafen AG, 88046 Friedrichshafen (DE)
(72) Erfinder: SAGAWE, Joachim, 88048 Friedrichshafen (DE)
(74) Vertreter: Scholz, Nikolaus
(86) Internationale Anmeldenummer: PCT/EP2012/050067
(87) Internationale Veröffentlichungsnummer: WO 2012/110260

(56) Entgegenhaltungen:
- DE-A1- 4 424 810
- DE-U1- 8 805 945
- GB-A- 258 905
- GB-A- 1 164 628

## Beschreibung

Die Erfindung betrifft eine Filtereinheit nach dem Oberbegriff des Patentanspruches 1 sowie ein Verfahren zum Betreiben der Filtereinheit nach dem Oberbegriff des Patentanspruches 5.

Filtereinheiten mit zwei Filterpatronen sind als so genannte Doppelschaltfilter bekannt und werden insbesondere als Schmierölfilter bei Schiffsgetrieben eingesetzt. Hier besteht die Vorschrift, dass ein Filterwechsel bei laufender Maschine durchführbar sein muss. Für diesen Fall ist eine Umschaltvorrichtung vorgesehen, durch welche ein Filter abgeschaltet und das andere durchströmt wird. Währenddessen kann die abgeschaltete Filtereinheit ausgetauscht werden. Derartige Doppelfilter sind wegen der beiden identischen Filterpatronen relativ groß, schwer und kostenaufwändig.

Bekannt sind auch so genannte Spaltfilter, die nicht ausgetauscht werden müssen, da sie während des Betriebes gereinigt werden können. Nachteilig bei den Spaltfiltern ist, dass eine maximale Filterfeinheit nicht erreicht werden kann. Die Grenze eines Spaltfilters liegt bei einer Filterfeinheit von etwa 50 µm. Die Filterfeinheit wird durch die Spaltweite bestimmt, es findet keine Filterung in der Tiefe, sondern nur in einer Filterebene statt.

Durch die GB 1,164,628 wurde ein Doppelschaltfilter für ein Schiffsgetriebe bekannt, also ein Schmierölfilter. Das bekannte Doppelschaltfilter weist zwei identische Filterpatronen auf, welche mit unterschiedlichen Filterelementen bestückt werden können, beispielsweise mit einem Papier- oder Feinfilterelement oder einem Grobfilter in Form eines Siebfilters. Dabei ist das Feinfilter für die Zeitperiode vorgesehen, in welcher die Schiffsmaschine eingefahren wird. Nach Ablauf dieser Einlaufphase wird das Feinfilter durch das Grobfilter ersetzt, ein Feinfilter wird nach der Einlaufphase nicht mehr verwendet. Der Wechsel vom Feinfilter auf das Grobfilter erfolgt durch Betätigung einer Umschalteinrichtung, welche den Austausch der Feinfilterpatrone bei laufender Maschine ermöglicht.

Ferner ist aus der DE 8805945 U1 eine Filtereinheit mit einem Hauptfilter und einem Hilfsfilter bekannt, wobei ein Meßorgan den Druckabfall des strömenden Mediums über den jeweils in Betrieb befindlichen Filter erfasst. Das genannte Meßorgan steuert auch eine Anzeigeeinrichtung mit zwei Lämpchen, von denen jedes Lämpchen einem der beiden Filter zugeordnet ist. Das Aufleuchten des betreffenden Lämpchens zeigt dabei das jeweils in Betrieb befindliche Filter an.

Es ist Aufgabe der vorliegenden Erfindung, eine Filtereinheit der eingangs genannten Art bereitzustellen, welche einerseits einen Filtertausch bei laufender Maschine erlaubt, andererseits jedoch weniger voluminös ausgebildet ist und einen geringeren Bauraum für den Einbau benötigt.

Die Aufgabe der Erfindung wird durch die unabhängigen Ansprüche 1 und 5 gelöst. Vorteilhafte Ausgestaltungen ergeben sich aus den Unteransprüchen.

Nach einem ersten Aspekt der Erfindung sind eine Hauptpatrone und eine Hilfspatrone vorgesehen, wobei die Hilfspatrone bezüglich ihrer äußeren Abmessungen wesentlich geringer ausfällt als die Hauptpatrone. In der Hauptpatrone ist ein Feinfilterelement vorgesehen, welches für den Dauerbetrieb bestimmt ist. In der Hilfspatrone dagegen ist ein Grobfilter vorgesehen, welches nur für die Zeit, in welcher die Hauptpatrone ausgetauscht wird, benötigt wird. Während des Wechsels des Hauptfilters (wegen Verschmutzung) wird das Schmieröl also nur durch ein Grobfilter gereinigt, was jedoch in der Regel nur wenige Minuten dauert. Eine relative Verunreinigung des Schmieröls mit Feinstpartikeln, welche das Grobfilter nicht zurückhalten kann, kann jedoch in Kauf genommen werden, da nach dem Filtertausch wieder eine Abreinigung des Schmieröls mit Feinfilter stattfindet. Die erfindungsgemäße Filtereinheit benötigt wegen der kleineren Hilfspatrone weniger Bauraum und Gewicht und spart Kosten.

Nach einer bevorzugten Ausführungsform ist die Hilfspatrone oberhalb der Hauptpatrone angeordnet. Dadurch ergibt sich eine relativ gedrungene Bauweise für die Filtereinheit, welche den Durchmesser der Hauptpatrone nur unwesentlich überschreitet.

Nach einer weiteren bevorzugten Ausführungsform sind der Zulauf und der Rücklauf der Hilfspatrone koaxial zu dem Ein- und Austritt der Filtereinheit angeordnet. Damit ergibt sich eine kurze und verlustarme Zu- und Abströmung für die Hilfspatrone.

Nach einer weiteren bevorzugten Ausführungsform weist das Feinfilter eine Filterfeinheit von ca. 10 µm auf - dies entspricht der im Allgemeinen geforderten Spezifikation für die Filterung von Schmieröl von Schiffsgetrieben.

Nach einer weiteren bevorzugten Ausführungsform weist das Grobfilter eine Filterfeinheit von etwa 40 µm auf. Das Grobfilter ist somit etwa um das Vierfache gröber als das Feinfilter und erlaubt somit eine entsprechend kleinere Hilfspatrone gegenüber der Größe der Hauptpatrone. Eine derartige Filterfeinheit ist ausreichend, um das Schmieröl während einer Dauer von wenigen Minuten von groben Verunreinigungen freizuhalten.

Erfindungsgemäß ist der Druckverlust in der Hilfspatrone auf den gleichen Schwellwert eingestellt wie der Druckverlust in der Hauptpatrone bei verschmutztem Feinfilter, bei welchem der Differenzdruckschalter anspricht und einen Alarm auslöst. Dies hat zur Folge, dass während des Wechsels des Hauptfilters ein Daueralarm ertönt, der erst nach Umschaltung auf Feinfilterbetrieb abschaltet.

Nach einem weiteren Aspekt der Erfindung wird in dem Falle, dass das Hauptfilter bzw. die Hauptpatrone ausgetauscht werden soll, die Umschalteinrichtung betätigt, die Ölzufuhr zum Hauptfilter unterbrochen und das zu filternde Öl der Hilfspatrone mit dem Grobfilter zugeführt. Die Feinfilterung wird also für kurze Zeit, d. h. für den Filterwechsel, unterbrochen und durch eine Grobfilterung ersetzt. Diese Grobfilterung ist ausreichend, um das Getriebe vor Schäden zu bewahren.

Es wird während des Wechsels der Hauptpatrone ein Daueralarm ausgelöst. Damit soll der Gefahr vorgebeugt werden, dass nach dem Filterwechsel ein Umschalten auf Feinfilterbetrieb vergessen wird.

Ein Ausführungsbeispiel der Erfindung ist in der Zeichnung dargestellt und wird im Folgenden näher beschrieben, wobei sich aus der Beschreibung und/oder der Zeichnung weitere Merkmale und/oder Vorteile ergeben können. Es zeigen
- Fig. 1: ein Schaltbild für die Anordnung von Haupt- und Hilfsfilter,
- Fig. 2: eine Filtereinheit beim Betrieb des Hauptfilters,
- Fig. 3: die Filtereinheit beim Betrieb des Hilfsfilters und
- Fig. 4: eine Schaltungsanordnung für einen Differenzdruckschalter.

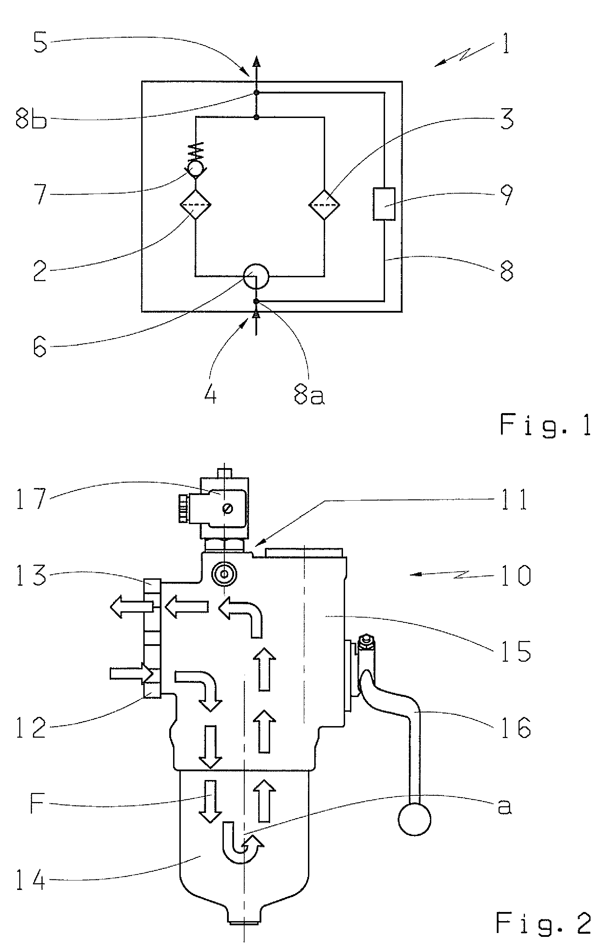

Fig. 1 zeigt ein Schaltbild 1 mit der Anordnung eines Hauptfilters 2 und eines parallel geschalteten Hilfsfilters 3, auch Schutzfilter 3 genannt. Das Schaltbild 1 zeigt ferner einen Eintritt 4 für ein zu filterndes Strömungsmedium sowie einen Austritt 5. In Strömungsrichtung hinter dem Eintritt 4 ist eine Umschalteinrichtung 6 angeordnet, welche das Strömungsmedium entweder durch den Hauptfilter 2 oder den Hilfsfilter 3 lenkt. In Strömungsrichtung hinter dem Hauptfilter 2 ist ein Rückschlagventil 7 angeordnet, welches in Richtung Austritt 5 öffnet und in Richtung Hauptfilter 2 schließt. Zwischen dem Eintritt 4 und dem Austritt 5 ist eine Messtrecke 8 mit einem ersten Druckaufnehmer 8a und einem zweiten Druckaufnehmer 8b zur Messung des Differenzdruckes zwischen Eintritt 4 und Austritt 5 vorgesehen, d. h. es wird entweder der Druckverlust im Hauptfilter 2 oder im Hilfsfilter 3 gemessen und einem Differenzdruckschalter 9 zugeführt. Der Differenzdruckschalter 9 kann mit einer Alarmeinrichtung gekoppelt sein.

Fig. 2 zeigt eine als Schmierölfilter ausgebildete Filtereinheit 10 mit einem Filtergehäuse 11, welches einen Eintrittstutzen 12 und einen Austrittsstutzen 13, auch kurz Eintritt 12 und Austritt 13 genannt, aufweist. An das Filtergehäuse 11 ist ein als Hauptpatrone 14 ausgebildeter Hauptfilter angeschlossen, d. h. austauschbar befestigt. In der Hauptpatrone 14, welche eine Längsachse a aufweist, ist ein hier nicht sichtbares Feinfilter angeordnet, welches das durch den Eintrittsstutzen 12 eintretende Schmieröl filtert. Oberhalb der Hauptpatrone 14 ist eine Hilfspatrone 15 angeordnet, welche einen nicht sichtbaren Grobfilter enthält. Die Hilfspatrone 15 ist wesentlich kleiner und leichter als die Hauptpatrone 14; sie weist bei einem bevorzugten Ausführungsbeispiel weniger als 40 % des Volumens der Hauptpatrone auf. Die Filtereinheit 10 weist ferner einen Umschalthebel 16 auf, welcher Teil einer nicht näher dargestellten Umschalteinrichtung ist.

Die Filtereinheit 10 weist auch einen Differenzdruckschalter 17 auf, welcher auf den Druckverlust zwischen Eintritt 12 und Austritt 13 bzw. den Druckverlust in der Hauptpatrone 14 oder in der Hilfspatrone 15 anspricht. Die dargestellte Filtereinheit 10 wird bevorzugt als Schmierölfilter für Schiffsgetriebe verwendet.

Fig. 2 zeigt den regulären Betrieb mit dem Hauptfilter 14, d. h. eine Feinfilterung des Schmieröls. Die Strömung des Schmieröls ist durch Pfeile F dargestellt. Das Feinfilter hat eine bevorzugte Filterfeinheit von ca. 10 µm. Die Umschalteinrichtung 16 ist so eingestellt, dass das eintretende Schmieröl den Hauptfilter 14 durchströmt, während gleichzeitig das Hilfsfilter oder die Hilfspatrone 15 für einen Strömungsdurchgang gesperrt ist. Es erfolgt eine Feinfilterung des Schmieröls. Der Druckverlust wird ständig gemessen und an den Differenzdruckschalter 17 weitergeleitet, welcher bei Erreichen eines vorbestimmten Schwellwertes anspricht und einen Alarm auslöst. Der Schwellwert wird in der Regel erreicht, wenn das Feinfilter in der Hauptpatrone 14 verschmutzt ist.

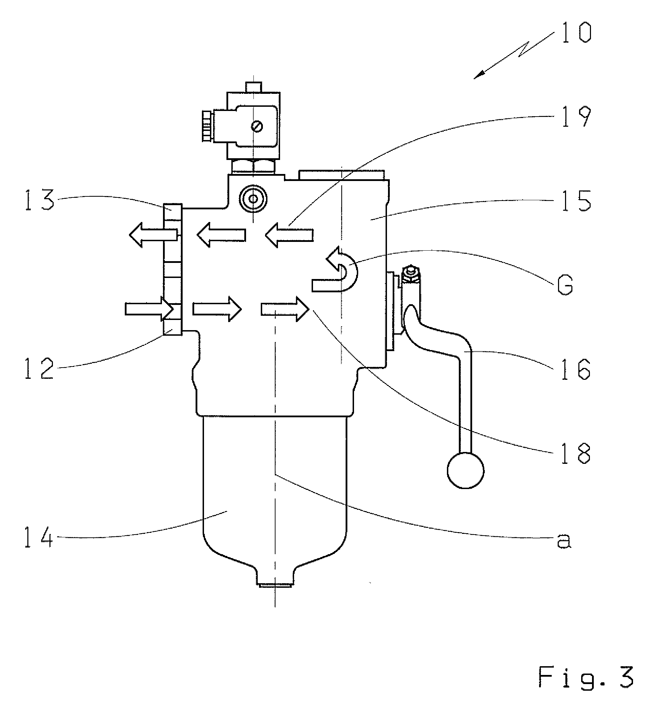

Fig. 3 zeigt die Filtereinheit 10 nach einer Betätigung der Umschalteinrichtung 16, und zwar in der Weise, dass die Hauptpatrone 14 für einen Strömungsdurchgang gesperrt ist und umgangen wird. Entsprechend den Strömungspfeilen G durchströmt das Schmieröl jetzt die Hilfspatrone 15, welche eine Eintrittsöffnung 18 und eine Austrittsöffnung 19 aufweist, die etwa koaxial oder fluchtend zum Eintrittstutzen 12 und zum Austrittsstutzen 13 der Filtereinheit 10 angeordnet sind. Der Ölstrom verläuft somit oberhalb der Hauptpatrone 14, bezogen auf deren Längsachse a.

Das in der Hilfspatrone 15 angeordnete Grobfilter weist etwa eine Filterfeinheit von ca. 40 µm auf, ist also ungefähr um das Vierfache gröber als das Feinfilter in der Hauptpatrone 14. Der Druckabfall in der Hilfspatrone 15 ist nach einer Ausführungsform so eingestellt, dass der Schwellwert, welcher den Alarm auslöst, bei der Grobfilterung ständig überschritten wird. Insofern herrscht beim Wechsel der Hauptpatrone 14 Daueralarm. Damit soll erreicht werden, dass nach dem Wechsel der Hauptpatrone 14 bzw. des darin befindlichen Feinfilters nicht vergessen wird, die Umschalteinrichtung 16 umzuschalten, d. h. den Umschalthebel 16 umzulegen, sodass wieder eine Feinfilterung gemäß Fig. 2 erfolgt. Der Filterwechsel dauert etwa 3 - 5 Minuten, sodass die Zeitdauer der Grobfilterung relativ kurz und daher unkritisch ist.

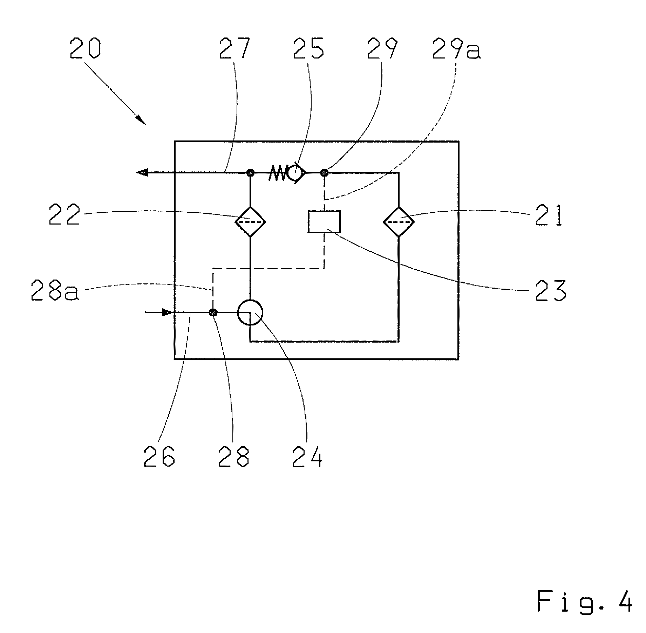

Fig. 4 zeigt eine weitere Schaltungsanordnung 20 für ein Hauptfilter 21, ein Hilfsfilter 22, einen Differenzdruckschalter 23, eine Umschalteinrichtung 24 sowie ein Rückschlagventil 25. Eine Eintrittsleitung für das Strömungsmedium ist mit 26 und eine Austrittsleitung ist mit 27 bezeichnet. Das Hauptfilter 21 und das Hilfsfilter 22 sind parallel zwischen Ein- und Austrittsleitung 26, 27 geschaltet, wobei die Umschalteinrichtung 24 das Strömungsmedium entweder über das Hauptfilter 21 oder über das Hilfsfilter 22 lenkt. Dem Differenzdruckschalter 23 sind ein erster Druckaufnehmer 28 in der Eintrittsleitung 26 und ein zweiter Druckaufnehmer 29 zwischen Hauptfilter 21 und Rückschlagventil 25 zugeordnet, welche jeweils durch Druckleitungen 28a, 29a mit dem Differenzdruckschalter 23 verbunden sind.

Im dargestellten Ausführungsbeispiel ist die Umschalteinrichtung 24 so eingestellt, dass das Strömungsmedium über das Hauptfilter 21 fließt. Der Differenzdruckschalter 23 misst somit den Druckverlust über dem Hauptfilter 21 und löst bei Erreichen eines Schwellwertes, der einem definierten Verschmutzungsgrad des Hauptfilters 21 entspricht, einen Alarm aus. Soll das Hauptfilter 21 gewechselt werden, wird die Umschalteinrichtung 24, vorzugsweise durch einen in Fig. 3 dargestellten Umschalthebel 16 derart umgeschaltet, dass das Strömungsmedium über das als Grobfilter ausgebildete Hilfsfilter 22 fließt. Das Hauptfilter 21 ist somit gesperrt. Damit misst der Differenzdruckschalter 23 nur den am Druckaufnehmer 28 in der Eintrittsleitung 26 anstehenden Druck, welcher höher ist als der bei Verschmutzung auftretende Druckverlust am Hauptfilter 21, sodass ein Daueralarm ausgelöst wird. Erst wenn der Filterwechsel vollzogen und die Umschalteinrichtung 24 wieder auf Normalbetrieb zurückgeschaltet wird, erlischt der Alarm. Durch diese Schaltungsvariante ist sichergestellt, dass beim Umlegendes Schalthebels der Umschalteinrichtung 24 immer ein Daueralarm ausgelöst wird, und zwar unabhängig vom Druckabfall des Hilfsfilters 22.

### Bezugszeichen

- 1: Schaltbild
- 2: Hauptfilter
- 3: Hilfsfilter
- 4: Eintritt
- 5: Austritt
- 6: Umschalteinrichtung
- 7: Rückschaltventil
- 8: Messstrecke
- 8a: erster Druckaufnehmer
- 8b: zweiter Druckaufnehmer
- 9: Differenzdruckschalter
- 10: Filtereinheit
- 11: Filtergehäuse
- 12: Eintrittsstutzen
- 13: Austrittsstutzen
- 14: Hauptpatrone
- 15: Hilfspatrone
- 16: Umschalthebel/-einrichtung
- 17: Differenzdruckschalter
- 18: Eintrittsöffnung
- 19: Austrittsöffnung
- 20: Schaltungsanordnung
- 21: Hauptfilter
- 22: Hilfsfilter
- 23: Differenzdruckschalter
- 24: Umschalteinrichtung
- 25: Rückschlagventil
- 26: Eintrittsleitung
- 27: Austrittsleitung
- 28: erster Druckaufnehmer
- 28a: Druckleitung
- 29: zweiter Druckaufnehmer
- 29a: Druckleitung

- a: Längsachse Hauptpatrone
- F: Strömungspfeil (Feinfilterung)
- G: Strömungspfeil (Grobfilterung)

## Patentansprüche

1. Filtereinheit, umfassend einen Eintritt (12) und einen Austritt (13) für ein zu filterndes Strömungsmedium, eine erste Filterpatrone (14) mit einem ersten Filterelement, eine zweite Filterpatrone (15) mit einem zweiten Filterelement und eine Umschalteinrichtung (16), welche einen wechselseitigen Filterbetrieb der ersten oder der zweiten Filterpatrone (14, 15) erlaubt, wobei die erste Filterpatrone als Hauptpatrone (14), das erste Filterelement als Feinfilter, die zweite Filterpatrone als Hilfspatrone (15) und das zweite Filterelement als Grobfilter ausgebildet sind, wobei dem als Hauptpatrone (14) ausgebildeten Hauptfilter (3) ein Differenzdruckschalter (9) mit einem ersten und einem zweiten Druckaufnehmer (8a, 8b) zugeordnet ist, und wobei der Differenzdruckschalter bei Überschreiten eines vorbestimmten Druckverlustes einen Alarm auslöst, **dadurch gekennzeichnet, dass** der Druckverlust in der Hilfspatrone auf den gleichen Schwellwert eingestellt ist wie der Druckverlust in der Hauptpatrone bei verschmutztem Feinfilter, bei welchem der Differenzdruckschalter anspricht und einen Alarm auslöst, sodass während des Wechsels des Hauptfilters ein Daueralarm ertönt, der erst nach Umschaltung auf Feinfilterbetrieb abschaltet.

2. Filtereinheit nach Anspruch 1, **dadurch gekennzeichnet, dass** der erste Druckaufnehmer (8a) des Differenzdruckschalters (9) am Eintritt (4) stromaufwärts der Umschalteinrichtung (6) und der zweite Druckaufnehmer (8b) am Austritt (5) angeordnet sind.

3. Filtereinheit nach einem der vorhergehenden Ansprüche, **dadurch gekennzeichnet, dass** das Feinfilter eine Filterfeinheit von ca. 10 µm aufweist.

4. Filtereinheit nach einem der vorhergehenden Ansprüche, **dadurch gekennzeichnet, dass** das Grobfilter eine Filterfeinheit von ca. 40 µm aufweist.

5. Verfahren zum Betreiben einer Filtereinheit (10) nach einem der vorhergehenden Ansprüche, wobei bei einem Wechsel der Hauptpatrone (14) die Umschalteinrichtung (16) betätigt, die Hilfspatrone (15) vom Strömungsmedium durchströmt wird und eine Grobfilterung erfolgt, wobei während der Durchströmung der Hilfspatrone (15) ein Daueralarm aktiviert ist, wobei dem Hauptfilter (3, 21) ein Differenzdruckschalter (9, 23) mit einem ersten und einem zweiten Druckaufnehmer (8a, 8b; 28, 29) zugeordnet ist, und wobei der Differenzdruckschalter bei Überschreiten eines vorbestimmten Druckverlustes einen Alarm auslöst, **dadurch gekennzeichnet, dass** der Druckverlust in der Hilfspatrone auf den gleichen Schwellwert eingestellt ist wie der Druckverlust in der Hauptpatrone bei verschmutztem Feinfilter, bei welchem der Differenzdruckschalter anspricht und einen Alarm auslöst, sodass während des Wechsels des Hauptfilters ein Daueralarm ertönt, der erst nach Umschaltung auf Feinfilterbetrieb abschaltet.

## Claims

1. Filter unit, comprising an inlet (12) and an outlet (13) for a flow medium to be filtered, a first filter cartridge (14) with a first filter element, a second filter cartridge (15) with a second filter element, and a switchover device (16) which permits alternate filter operation of the first or the second filter cartridge (14, 15), the first filter cartridge being configured as a main cartridge (14), the first filter element being configured as a fine filter, the second filter cartridge being configured as an auxiliary cartridge (15), and the second filter element being configured as a coarse filter, the main filter (3) which is configured as the main cartridge (14) being assigned a differential pressure switch (9) with a first and a second pressure sensor (8a, 8b), and the differential pressure switch triggering an alarm if a predefined pressure loss is exceeded, **characterized in that** the pressure loss in the auxiliary cartridge is set to the same threshold value as the pressure loss in the main cartridge in the case of a contaminated fine filter, at which threshold value the differential pressure switch responds and triggers an alarm, with the result that a continuous alarm sounds during the change of the main filter, which continuous alarm switches off only after a switchover to fine filter operation.

2. Filter unit according to Claim 1, **characterized in that** the first pressure sensor (8a) of the differential pressure switch (9) is arranged at the inlet (4) upstream of the switchover device (6), and the second pressure sensor (8b) is arranged at the outlet (5).

3. Filter unit according to either of the preceding claims, **characterized in that** the fine filter has a filter fineness of approximately 10 µm.

4. Filter unit according to one of the preceding claims, **characterized in that** the coarse filter has a filter fineness of approximately 40 µm.

5. Method for operating a filter unit (10) according to one of the preceding claims, the switchover device (16) actuating in the case of a change of the main cartridge (14), the auxiliary cartridge (15) being flowed through by flow medium, and coarse filtering taking place, a continuous alarm being activated during the throughflow of the auxiliary cartridge (15), the main filter (3, 21) being assigned a differential pressure switch (9, 23) with a first and a second pressure sensor (8a, 8b; 28, 29), and the differential pressure switch triggering an alarm if a predefined pressure loss is exceeded, **characterized in that** the pressure loss in the auxiliary cartridge is set to the same threshold value as the pressure loss in the main cartridge in the case of a contaminated fine filter, at which threshold value the differential pressure switch responds and triggers an alarm, with the result that a continuous alarm sounds during the change of the main filter, which continuous alarm switches off only after a switchover to fine filter operation.

## Revendications

1. Unité de filtration, comprenant une entrée (12) et une sortie (13) pour un fluide en circulation qui doit être filtré, une première cartouche de filtration (14) avec un premier élément filtrant, une deuxième cartouche de filtration (15) avec un deuxième élément filtrant et un système de commutation (16) qui permet un service filtrant alterné de la première ou de la deuxième cartouche de filtration (14, 15), la première cartouche de filtration étant conçue en tant que cartouche principale (14), le premier élément filtrant en tant que filtre fin, la deuxième cartouche de filtration en tant que cartouche auxiliaire (15) et le deuxième élément filtrant en tant que filtre grossier, au filtre principal (3) conçu en tant que cartouche principale (14) étant affecté un interrupteur (9) de pression différentielle avec un premier et un deuxième capteur de pression (8a, 8b) et lors du dépassement d'une perte de pression prédéfinie, l'interrupteur de pression différentielle déclenchant une alarme, **caractérisée en ce que** la perte de pression dans la cartouche auxiliaire est réglée sur la même valeur seuil que la perte de pression dans la cartouche principale lorsque le filtre fin est encrassé, l'interrupteur de pression différentielle se déclenchant alors et déclenchant une alarme, de sorte que lors du remplacement du filtre principal, une alarme permanente résonne qui ne se coupe qu'après la commutation sur le mode de filtration fine.

2. Unité de filtration selon la revendication 1, **caractérisée en ce que** le premier capteur de pression (8a) de l'interrupteur (9) de pression différentielle est placé à l'entrée (4), en amont du système de commutation (6) et le deuxième capteur de pression (8b) est placé à la sortie (5).

3. Unité de filtration selon l'une quelconque des revendications précédentes, **caractérisée en ce que** le filtre fin comporte une unité de filtration d'environ 10 µm.

4. Unité de filtration selon l'une quelconque des revendications précédentes, **caractérisée en ce que** le filtre grossier comporte une unité de filtration d'environ 40 µm.

5. Procédé destiné à faire fonctionner une unité de filtration (10) selon l'une quelconque des revendications précédentes, lors d'un remplacement de la cartouche principale (14), le système de commutation (16) étant actionné, le filtre auxiliaire (15) étant irrigué par le fluide circulant et il s'effectue une filtration grossière, pendant l'irrigation de la cartouche principale (15), une alarme permanente étant activée, au filtre principal (3, 21) étant affecté un interrupteur (9, 23) de pression différentielle avec un premier et un deuxième capteurs de pression (8a, 8b ; 28, 29) et lors du dépassement d'une perte de pression prédéterminée, l'interrupteur de pression différentielle déclenchant une alarme, **caractérisé en ce que** la perte de pression dans la cartouche auxiliaire est réglée sur la même valeur seuil que la perte de pression dans la cartouche principale lorsque le filtre fin est encrassé, lors duquel l'interrupteur de pression différentielle répond et déclenche une alarme, de sorte que pendant le changement du filtre principal, une alarme permanente résonne qui ne se coupe qu'après la commutation sur le mode de filtration fine.
